# FASCICULE DE BREVET EUROPEEN

(11) **EP 2 105 046 B1**
(45) Date de publication et mention de la délivrance du brevet: **17.02.2016**
(21) Numéro de dépôt: 09305243.9
(22) Date de dépôt: 17.03.2009
(51) Int. Cl.: A01D 34/71

(54) **Carter de tondeuse-broyeuse muni d'un déflecteur escamotable**
Gehäuse eines Mulchmähers mit einem einfahrbaren Deflektor
Case of a mulching mower equipped with a retractable deflector

(30) Priorité: 25.03.2008 FR 0851908
(43) Date de publication de la demande: 30.09.2009
(73) Titulaire: ETESIA (Société par actions simplifiée), 67160 Wissembourg (FR)
(72) Inventeur: Siegel, Christophe, 67240 Gries (FR); Schmitt, Alfred, 67250 Lampertsloch (FR)
(74) Mandataire: Nuss, Laurent

(56) Documents cités:
- EP-A- 0 882 387
- US-A- 4 726 178
- US-A- 5 195 311
- US-A- 5 410 867
- US-B1- 6 971 224

## Description

La présente invention concerne le domaine de la construction de machines d'entretien des pelouses, en particulier pour la tonte de ces dernières, notamment au moyen de tondeuses-broyeuses ou de faucheuses, et a pour objet un carter de telle tondeuse-broyeuse muni d'un déflecteur escamotable.

La tonte des surfaces engazonnées est généralement effectuée au moyen de tondeuses à gazon, de tondeuses-broyeuses ou de faucheuses, ces machines étant de type poussée, autotractée ou à conducteur porté. La tonte par tondeuses à gazon s'effectue avec ramassage simultané de l'herbe coupée ou avec éjection latérale de ladite herbe coupée.

Les machines de tonte de l'herbe du type tondeuses-broyeuses sont destinées à réaliser une coupe de l'herbe, suivie immédiatement d'un broyage de l'herbe coupée, qui est épandue entre les brins d'herbe subsistants. Ces machines se présentent sous une forme de tondeuse à gazon à carter fermé muni d'un dôme sensiblement torique. L'herbe coupée, ramenée dans le champ d'action de la lame de coupe, est broyée par cette dernière en fine particules, qui se répandent sur le sol, entre les brins ayant subi la tonte.

Pour éviter une trop grande accumulation d'herbe coupée dans le carter et donc un bourrage, notamment en présence d'herbe haute, il a été prévu d'équiper les tondeuses-broyeuses d'un clapet amovible latéral permettant une éjection latérale de l'herbe coupée, éventuellement dans un réceptacle de ramassage ou en andain.

De tels clapets amovibles doivent assurer que l'herbe projetée, à laquelle peuvent se mélanger accidentellement des éléments plus lourds et durs tels que des pierres, soit parfaitement canalisée hors de la zone d'évolution d'un opérateur éventuel ou d'une tierce personne, et en tout état de cause vers le sol à une distance très courte de son point d'éjection, ce afin d'éviter tout risque de blessure.

A cet effet, on connaît, par US-A-5 197 265 un dispositif anti-projection et de répartition de l'herbe coupée et d'autres produits éjectés en partie arrière d'une machine à conducteur marchant. Un tel dispositif ne peut, cependant, pas assurer correctement une fermeture totale du dôme du carter.

Il est également connu, par US-A-4 205 512, un carter muni, sensiblement dans l'axe de roues de deux écopes destinées à rabattre l'herbe coupée et les éventuelles pierres ou autres objets vers le bas, le long du parcours de la machine. Un tel dispositif permet, certes, de réaliser une projection latérale, vers le bas, sans risque pour l'opérateur, mais une suppression de l'éjection latérale en vue d'un broyage complet n'est pas envisageable du fait que les écopes sont fixées à demeure dans le carter.

US-A 5 210 998 décrit un clapet de fermeture provisoire d'un carter, en vue de réaliser un broyage complet, ce clapet étant fixé devant une ouverture ménagée dans la paroi du carter au moyen de boulons et présentant sur sa face interne une forme correspondante à celle du reste du carter. La prévision d'un tel dispositif permet soit d'assurer un broyage complet sans éjection, soit d'effectuer une éjection de l'herbe broyée dans un canal d'éjection lui-même relié à un dispositif de déviation de l'ensemble des produits vers le sol. Ce dernier clapet est plus particulièrement mis en oeuvre avec une machine du type tondeuse-broyeuse à conducteur porté et le dispositif de déviation de l'ensemble des produits s'étend hors de l'encombrement de la machine en elle-même, de sorte qu'il peut être gênant dans le cas de certaines manoeuvres.

On connaît également par US-A 5 765 346, ainsi que par US-A 4 897 988 un clapet monté basculant sur une paroi d'un carter de tondeuse broyeuse et assurant, soit la fermeture totale d'un orifice d'éjection, soit la déflexion de l'herbe coupée et d'éventuels autres produits vers le sol.

Ces clapets connus assurent, certes, une déflexion de l'herbe coupée et d'éventuels produits projetés sans risque pour un opérateur, en particulier un conducteur marchant, mais présentent l'inconvénient d'être en saillie par rapport au carter de la machine entourant le dôme, ce qui peut être gênant lors de certaines évolutions, en particulier pour le contournement d'obstacles, le clapet étant alors, soit exposé à un risque de détérioration, soit déplacé dans une position de libération totale de l'ouverture d'éjection.
Ainsi, US-A-4 726 178 décrit un clapet de fermeture d'un carter, qui peut être utilisé comme déflecteur. Pour une utilisation comme déflecteur, le clapet est monté de manière pivotable sur une platine fixée sur le dessus du carter de la tondeuse, cette platine étant maintenue dans ses positions extrêmes par un dispositif de verrouillage. Du fait que la platine fait partie de ce déflecteur, elle ne peut, cependant, pas se rétracter d'une position d'ouverture du déflecteur vers une position de fermeture du déflecteur, dans le cas de rencontre avec un obstacle, cette platine étant verrouillée dans la position d'ouverture.

En outre, le clapet, monté à la partie avant de la platine et fermant le carter dans la position d'utilisation de la tondeuse comme broyeuse, est, certes, déplaçable en pivotement vers le haut, contre l'action d'un ressort, mais en cas de rencontre d'un obstacle de relativement grande hauteur, ce clapet ne peut pas s'escamoter.

Il a également été proposé de munir le dôme du carter d'une tondeuse-broyeuse d'un dispositif de fermeture ou de libération d'une ouverture de ce dôme, logé directement dans le dôme et actionnable par l'intermédiaire d'un mécanisme extérieur (US-A-2003/0217542, CA-A-2 418 999).

Un tel dispositif, permet, certes, de remplir les conditions de fermeture ou d'ouverture à volonté d'un orifice d'éjection, et ne pose aucun problème en ce qui concerne une éventuelle collision avec un obstacle à contourner ou autre, l'ensemble du dispositif étant totalement logé dans le carter de la machine, mais est de constitution relativement complexe et donc coûteux.

Enfin, US-A-2005/0144924 et US-A-5 195 311 décrivent des carters de tondeuse-broyeuse pourvus d'au moins une lame de coupe guidée sous un dôme de forme générale semi-torique prévu dans ledit carter qui est muni d'un déflecteur, escamotable en pivotement contre l'action d'un ressort. Ces clapets sont montés sur la paroi du carter de tondeuse et sont susceptibles de s'escamoter devant un obstacle. De tels clapets peuvent donc parfaitement s'écarter en cas de rencontre avec un obstacle et fermer provisoirement l'ouverture du carter.

Cependant, ces clapets connus ne présentent pas une forme correspondante à celle du dôme du carter, sur leur face interne, de sorte qu'en position de fermeture, la continuité du dôme n'est pas assurée. Par ailleurs, et notamment dans le cas de la réalisation selon US-A-2005/0144924, comme le clapet mobile coopère, pour son maintien en position fermée, avec un dispositif de retenue, il est possible que ce dernier se referme sur le clapet mobile, dans une position de blocage, lorsque ledit clapet mobile s'efface devant un obstacle et ferme le dôme du carter.

Enfin, dans tous les cas, le dégagement d'une ouverture d'éjection a pour conséquence, notamment en présence d'un clapet mobile, de ne pas assurer correctement la sécurité contre les projections.

La présente invention a pour but de pallier ces inconvénients en proposant un carter de tondeuse-broyeuse, poussée, autotractée ou à conducteur porté, muni d'un déflecteur escamotable permettant d'assurer une sécurité totale de fonctionnement et contre les projections, en position de broyage et en éjection latérale ou arrière et de transformer ledit carter en carter de faucheuse à éjection latérale ou arrière.

A cet effet, le carter de tondeuse-broyeuse, pourvu d'au moins une lame de coupe guidée sous un dôme de forme générale semi-torique prévu dans ledit carter qui est muni d'un déflecteur, escamotable en pivotement contre l'action d'un ressort et pouvant être maintenu en position escamotée par l'intermédiaire d'un dispositif de maintien libérable, est caractérisé en ce que le déflecteur escamotable forme, en position escamotée, partie intégrante du dôme du carter et en ce que le dispositif de maintien libérable du déflecteur escamotable est relié à articulation à l'extrémité libre dudit déflecteur escamotable, ainsi qu'au carter logeant ledit dôme et réalise un déploiement ou un redéploiement automatique dudit déflecteur, ledit dispositif de maintien libérable du déflecteur escamotable étant muni, en outre, d'un moyen de sécurité contre les projections, en position d'ouverture du déflecteur, ainsi que dans toutes les positions intermédiaires d'escamotage ou d'ouverture.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un carter de tondeuse-broyeuse muni d'un déflecteur escamotable conforme à l'invention en position ouverte d'éjection latérale, et
la figure 2 est une vue analogue à celle de la figure 1, le déflecteur escamotable étant en position fermée et verrouillée, de broyage.

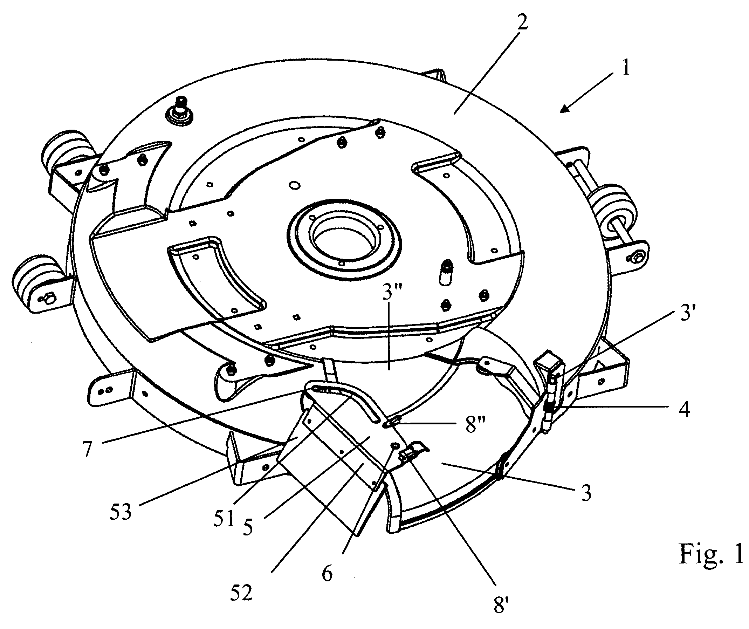

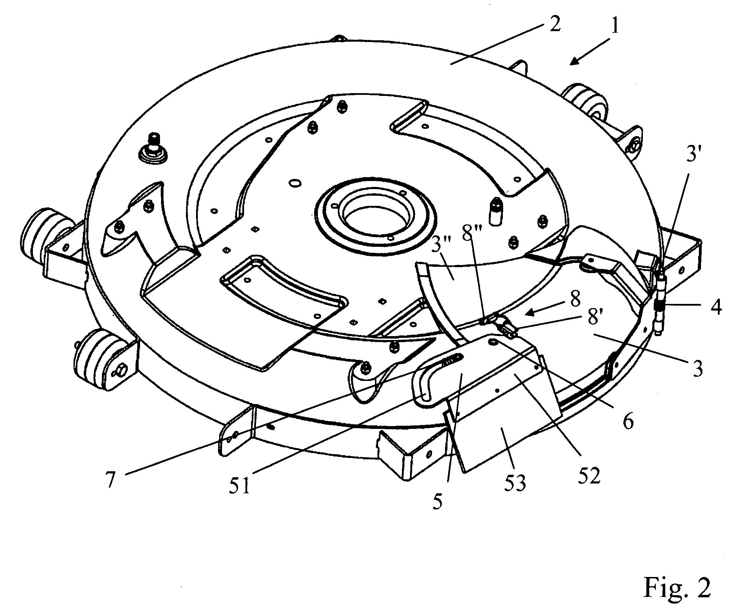

Les figures 1 et 2 des dessins annexés représentent, à titre exemple, un carter 1 de tondeuse-broyeuse, pourvu d'au moins une lame de coupe guidée sous un dôme 2 de forme générale semi-torique prévu dans ledit carter 1, qui est muni d'un déflecteur 3, escamotable en pivotement contre l'action d'un ressort 4 et pouvant être maintenu en position escamotée par l'intermédiaire d'un dispositif de maintien libérable 5.

Conformément à l'invention, le déflecteur escamotable 3 forme, en position escamotée, partie intégrante du dôme 2 du carter 1 et le dispositif de maintien libérable 5 du déflecteur escamotable 3 est relié à articulation à l'extrémité libre dudit déflecteur escamotable 3, ainsi qu'au carter 1 logeant le dôme 2.

Ce dispositif de maintien libérable 5 du déflecteur escamotable 3 réalise un déploiement ou un redéploiement automatique dudit déflecteur 3 et est muni, en outre, d'un moyen de sécurité contre les projections, en position d'ouverture du déflecteur 3, ainsi que dans toutes les positions intermédiaires d'escamotage ou d'ouverture.

Le déflecteur escamotable 3, qui est monté à pivotement au moyen d'un axe 3' sur le carter 1 et qui est chargé dans le sens d'un pivotement automatique à l'ouverture par le ressort 4, présente une section transversale identique à celle du dôme 2 et est pourvu, sur son bord intérieur, d'un rebord horizontal 3" s'étendant, en position d'ouverture du déflecteur escamotable 3 au-dessus de l'espace libéré par ce dernier dans le dôme 2 (figure 1) et s'appuyant sur la partie centrale du carter 1 en position d'escamotage dudit déflecteur escamotable 3 (figure 2).

Ainsi, il est possible, de maintenir constamment une étanchéité entre le carter 1 avec le dôme 2 et le déflecteur escamotable 3, à tous les endroits où ces éléments sont en contact. En effet, lorsque le déflecteur escamotable 3 est dans la position représentée à la figure 1, il est, d'une part, totalement dans le prolongement du dôme 2, ce sans création d'un interstice rendant possible une projection d'herbe coupée ou autre au niveau de l'articulation du déflecteur escamotable 3 sur le carter 1 et, d'autre part, le rebord 3" réalise une continuité de la fermeture du carter 1 et du dôme 2 du côté opposé, c'est-à-dire à l'endroit où le déflecteur fonctionne à la manière d'un éjecteur latéral. Dans le cas d'un fonctionnement en tondeuse-broyeuse, le déflecteur escamotable 3 est entièrement basculé dans sa position de fermeture, dans laquelle ses extrémités recouvrent entièrement et de manière étanche aux projections l'ouverture correspondante du dôme 2, ce en assurant une continuité du dôme.

Le dispositif de maintien libérable 5 du déflecteur escamotable 3 se présente préférentiellement sous forme d'une platine reliée, d'une part, par une extrémité à une articulation 6 prévue sur le déflecteur escamotable 3 près de son extrémité écartée du carter 1, en position d'éjection, cette platine étant reliée, par ailleurs, à son extrémité opposée, à un ergot de guidage 7 prévu sur le carter 1 au-dessus du dôme 2, près du bord de l'ouverture recouverte par le rebord 3" du déflecteur escamotable 3, dans la position d'éjection de ce dernier, cet ergot 7 coopérant avec une rainure curviligne de guidage 51 du dispositif de maintien libérable 5. La rainure curviligne de guidage 51, qui coopère avec l'ergot 7, permet de guider et de maintenir l'extrémité d'éjection du déflecteur escamotable 3, tant pendant son déplacement d'ouverture automatique que pendant un déplacement d'escamotage, par exemple lorsqu'il rencontre un obstacle.

En outre, selon une autre caractéristique de l'invention, le dispositif de maintien libérable 5 du déflecteur escamotable 3 est pourvu, du côté opposé à l'articulation 6 sur ledit déflecteur escamotable 3 et à la rainure curviligne de guidage 51, d'un rebord 52 incliné vers le bas, parallèlement au plan de l'extrémité d'éjection dudit déflecteur escamotable 3, dans la position d'éjection de ce dernier, ce rebord 52 étant avantageusement muni d'une jupe souple 53 s'étendant, dans ladite position d'éjection devant l'ouverture d'éjection sur toute la hauteur du carter 1. Une telle réalisation du dispositif de maintien libérable 5 permet, d'une part, d'assurer un maintien automatique en position d'ouverture du déflecteur escamotable 3, sous l'action du ressort 4 et, d'autre part, un guidage complémentaire dudit déflecteur 3 pendant son escamotage ou lors de sa fermeture, ainsi que pendant son déplacement d'ouverture automatique.

De plus, la jupe souple 53 permet d'assurer une sécurité optimale contre les projections, en position d'ouverture automatique du déflecteur 3, ainsi que dans toutes les positions intermédiaires d'escamotage ou d'ouverture.

Par ailleurs, le dispositif de maintien libérable 5 est muni d'un moyen 8 de verrouillage en position de fermeture du déflecteur escamotable 3, avantageusement constitué sous forme d'un levier à genouillère 8', monté sur l'extrémité du dispositif de maintien libérable 5, entre son bord externe et l'articulation 6 de ce dernier sur le déflecteur escamotable 3 et coopérant, en position de fermeture verrouillée dudit déflecteur escamotable 3, avec un crochet 8" fixé sur le déflecteur escamotable 3, près de l'intersection de celui-ci avec son rebord horizontal 3", à proximité de son ouverture d'éjection (figures 1 et 2). Grâce à ce moyen 8 de verrouillage en position de fermeture du déflecteur escamotable 3, il est possible de maintenir fermement le déflecteur 3 en position sur le carter 1, afin d'assurer la continuité du dôme 2 pendant le broyage, sans risque de libération accidentelle du déflecteur escamotable 3, par exemple en cours de travail, par heurt d'un obstacle ou autre.

En outre, la prévision du dispositif de maintien libérable 5 assure, dans la position d'éjection du déflecteur 3, d'une part, une protection totale de l'opérateur ou de personnes évoluant dans la zone de travail contre les projections, d'autre part, un guidage parfait de l'extrémité d'éjection du déflecteur 3 pendant son mouvement d'ouverture automatique sous l'action du ressort 4, après libération du moyen de verrouillage 8 et, enfin, également un guidage parfait pendant un escamotage total ou partiel du déflecteur 3, suite à une rencontre avec un obstacle tout en évitant avec certitude un maintien accidentel du déflecteur 3 dans une position escamotée.

De plus, la prévision de la rainure curviligne de guidage 51 avec l'ergot de guidage 7 permet, lors de tous les déplacements de pivotement du déflecteur escamotable 3, un mouvement parfaitement guidé du dispositif de maintien libérable 5, de sorte que ce dernier et la jupe souple 53 reliée à son rebord 52 sont continuellement et automatiquement maintenus dans l'emprise maximale du carter 1, délimitée par l'extrémité libre du déflecteur escamotable 3 formant l'ouverture d'éjection de la tondeuse broyeuse, en position d'éjection de l'herbe coupée et devant cette ouverture. Il en résulte qu'aucun élément du carter 1 renfermant le dôme 2 n'est en saillie au-delà de l'extrémité libre du déflecteur escamotable 3, qui peut donc être actionné librement par tout obstacle se présentant devant lui dans le sens de la marche, ledit obstacle ne risquant pas, de ce fait, d'accrocher un quelconque élément accessoire et de détruire ou d'endommager celui-ci, le retour en position de service du déflecteur 3 s'effectuant automatiquement.

Grâce à l'invention, il est possible de réaliser un carter de tondeuse-broyeuse, pourvu d'un déflecteur escamotable en pivotement contre l'action d'un ressort et pouvant être maintenu en position escamotée par l'intermédiaire d'un dispositif de maintien libérable, ce déflecteur réalisant, d'une part, une continuité parfaite du dôme du carter, dans sa position escamotée, et permettant, d'autre part, en position d'éjection, d'assurer une protection totale contre les projections, tout en garantissant un déroulement parfait des mouvements d'escamotage et de redéploiement automatiques en cas de rencontre avec un obstacle.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Carter (1) de tondeuse-broyeuse, pourvu d'au moins une lame de coupe guidée sous un dôme (2) de forme générale semi-torique prévu dans ledit carter (1) qui est muni d'un déflecteur (3), escamotable en pivotement contre l'action d'un ressort (4) et pouvant être maintenu en position escamotée par l'intermédiaire d'un dispositif de maintien libérable (5), **caractérisé en ce que** le déflecteur escamotable (3) forme, en position escamotée, partie intégrante du dôme (2) du carter (1) et **en ce que** le dispositif de maintien libérable (5) du déflecteur escamotable (3) est relié à articulation à l'extrémité libre dudit déflecteur escamotable (3), ainsi qu'au carter (1) logeant le dôme (2) et réalise un déploiement ou un redéploiement automatique dudit déflecteur escamotable (3), ledit dispositif de maintien libérable (5) du déflecteur escamotable (3) étant muni, en outre, d'un moyen de sécurité contre les projections, en position d'ouverture du déflecteur escamotable (3), ainsi que dans toutes les positions intermédiaires d'escamotage ou d'ouverture.

2. Carter, suivant la revendication 1, **caractérisé en ce que** le déflecteur escamotable (3), qui est monté à pivotement au moyen d'un axe (3') sur le carter (1) et qui est chargé dans le sens d'un pivotement automatique à l'ouverture par le ressort (4), présente une section transversale identique à celle du dôme (2) et est pourvu sur son bord intérieur d'un rebord horizontal (3") s'étendant, en position d'ouverture du déflecteur escamotable (3) au-dessus de l'espace libéré par ce dernier dans le dôme (2) et s'appuyant sur la partie centrale du carter (1) en position d'escamotage dudit déflecteur escamotable (3).

3. Carter, suivant la revendication 1, **caractérisé en ce que** le dispositif de maintien libérable (5) du déflecteur escamotable (3) se présente sous forme d'une platine reliée, d'une part, par une extrémité à une articulation (6) prévue sur le déflecteur escamotable (3) près de son extrémité écartée du carter (1), en position d'éjection, cette platine étant reliée, par ailleurs, à son extrémité opposée, à un ergot de guidage (7) prévu sur le carter (1) au-dessus du dôme (2), près du bord de l'ouverture recouverte par le rebord (3") du déflecteur escamotable (3), dans la position d'éjection de ce dernier, cet ergot (7) coopérant avec une rainure curviligne de guidage (51) du dispositif de maintien libérable (5).

4. Carter, suivant la revendications 3, **caractérisé en ce que** le dispositif de maintien libérable (5) du déflecteur escamotable (3) est pourvu, du côté opposé à l'articulation (6) sur ledit déflecteur escamotable (3) et à la rainure curviligne de guidage (51), d'un rebord (52) incliné vers le bas, parallèlement au plan de l'extrémité d'éjection dudit déflecteur escamotable (3), dans la position d'éjection de ce dernier, ce rebord (52) étant muni d'une jupe souple (53) s'étendant, dans ladite position d'éjection devant l'ouverture d'éjection, sur toute la hauteur du carter (1) en assurant une sécurité optimale contre les projections, en position d'ouverture du déflecteur, ainsi que dans toutes les positions intermédiaires d'escamotage ou d'ouverture.

5. Carter, suivant l'une quelconque des revendications 3 et 4, **caractérisé en ce que** le dispositif de maintien libérable (5) du déflecteur escamotable (3) est muni d'un moyen (8) de verrouillage en position de fermeture du déflecteur escamotable (3) constitué sous forme d'un levier à genouillère (8'), monté sur l'extrémité du dispositif de maintien libérable (5), entre son bord externe et l'articulation (6) de ce dernier sur le déflecteur escamotable (3) et coopérant, en position de fermeture verrouillée dudit déflecteur escamotable (3), avec un crochet (8") fixé sur le déflecteur escamotable (3), près de l'intersection de celui-ci avec son rebord horizontal (3"), à proximité de son ouverture d'éjection.

## Patentansprüche

1. Gehäuse (1) eines Mulchmähers, das mit mindestens einer Schneide-Klinge ausgestattet ist, welche Klinge unter einer allgemein halbtorusförmigen Kuppel (2) geführt ist, welche Kuppel in dem genannten Gehäuse (1) vorgesehen ist, das mit einem Deflektor (3) ausgestattet ist, welcher Deflektor gegen die Wirkung einer Feder (4) schwenkend einfahrbar ist und in der eingefahrenen Stellung mittels einer freigebbaren Haltevorrichtung (5) gehalten werden kann, **dadurch gekennzeichnet, dass** der einfahrbare Deflektor (3), in der eingefahrenen Stellung, einen integralen Bestandteil der Kuppel (2) des Gehäuses (1) bildet, und dass die freigebbare Haltevorrichtung (5) des einfahrbaren Deflektors (3) gelenkig mit dem freien Ende des genannten einfahrbaren Deflektors (3) sowie mit dem Gehäuse (1), in dem die Kuppel (2) unterbracht ist, verbunden ist und ein automatisches Ausfahren oder Wiedereinfahren des genannten einfahrbaren Deflektors (3) realisiert, wobei die freigebbare Haltevorrichtung (5) des einfahrbaren Deflektors (3), unter anderem, mit einer Sicherheitsvorrichtung gegen Auswürfe in geöffneter Stellung des einfahrbaren Deflektors sowie in allen Zwischenstellungen des Einfahrens oder des Öffnens ausgestattet ist.

2. Gehäuse nach Anspruch 1, **dadurch gekennzeichnet, dass** der einfahrbare Deflektor (3), der schwenkbar mittels einer Achse (3') an dem Gehäuse (1) angebracht ist und der in der Richtung eines automatischen Schwenkens beim Öffnen durch die Feder (4) vorgespannt ist, einen zur Kuppel (2) identischen Querschnitt aufweist und an seinem inneren Rand mit einer horizontalen Kante (3") ausgestattet ist, welche Kante, wenn sich der einfahrbare Deflektor (3) in der geöffneten Stellung befindet, sich über den von dem Deflektor (3) freigegebenen Raum in der Kuppel (2) hinaus erstreckt und sich auf dem zentralen Teil des Gehäuses (1) in der eingefahrenen Stellung des genannten einfahrbaren Deflektors (3) abstützt.

3. Gehäuse nach Anspruch 1, **dadurch gekennzeichnet, dass** die freigebbare Haltevorrichtung (5) des einfahrbaren Deflektors (3) die Form einer Platte aufweist, die einerseits an einem Ende mit einem Gelenk (6) verbunden ist, das auf dem einfahrbaren Deflektor (3) nahe dessen vom Gehäuse (1) entfernten Ende vorgesehen ist, in einer Auswurfsstellung, und welche Platte andererseits, an ihrem gegenüberliegenden Ende, mit einem Führungsnocken (7) verbunden ist, der an dem Gehäuse (1) oberhalb der Kuppel (2) nahe der durch die Kante (3") des einfahrbaren Deflektors (3) in der Auswurfsstellung desselben abgedeckten Öffnung vorgesehen ist, welcher Nocken (7) mit einer krummlinigen Führungsnut (51) der freigebbaren Haltevorrichtung (5) zusammenwirkt.

4. Gehäuse nach Anspruch 3, **dadurch gekennzeichnet, dass** die freigebbare Haltevorrichtung (5) des einfahrbaren Deflektors (3), auf der dem Gelenk (6) an dem genannten einfahrbaren Deflektor (3) und der krummlinigen Führungsnut (51) gegenüberliegenden Seite mit einer Kante (52) vorgesehen ist, die parallel zur Ebene des Auswurfsendes des genannten einfahrbaren Deflektors (3), wenn dieser in der Auswurfstellung ist, nach unten geneigt ist, wobei diese Kante (52) mit einer biegsamen Schürze (53) vorgesehen ist, die sich in der Auswurfstellung vor der Auswurföffnung über die ganze Höhe des Gehäuses (1) erstreckt und dabei eine optimale Sicherheit gegen Auswürfe in offener Stellung des Deflektors sowie in allen Zwischenstellungen des Einfahrens oder des Öffnens gewährleistet.

5. Gehäuse nach Anspruch 3 oder 4, **dadurch gekennzeichnet, dass** die freigebbare Haltevorrichtung (5) des einfahrbaren Deflektors (3) mit einer Vorrichtung (8) zum Verriegeln des einfahrbaren Deflektors (3) in geschlossener Stellung des einfahrbaren Deflektors (3) ausgestattet ist, welche Vorrichtung in Form eines Kniehebels (8') ausgebildet ist, der am Ende der freigebbaren Haltevorrichtung (5) zwischen deren äußerem Rand und der Anlenkung (6) derselben an dem einfahrbaren Deflektor (3) angebracht ist und in der geschlossenen, verriegelten Stellung des einfahrbaren Deflektors (3) mit einem Haken (8") zusammenwirkt, der auf dem einfahrbaren Deflektor (3), nahe dessen Schnittlinie mit seiner horizontalen Kante (3"), in der Nähe seiner Auswurföffnung, befestigt ist.

## Claims

1. Mulching mower casing (1) provided with at least one cutting blade guided under a dome (2) of semi-toroidal overall shape provided in said casing (1), which is provided with a deflector (3) that is retractable by pivoting counter to the action of a spring (4) and can be held in the retracted position by way of a releasable holding device (5), **characterized in that** the retractable deflector (3) forms, in the retracted position, an integral part of the dome (2) of the casing (1), and **in that** the releasable holding device (5) for the retractable deflector (3) is connected in a hinged manner to the free end of said retractable deflector (3) and also to the casing (1) housing the dome (2) and effects automatic deployment or redeployment of said retractable deflector (3), said releasable holding device (5) for the retractable deflector (3) furthermore being provided with a security means that provides security against projections in the open position of the retractable deflector (3) and in all intermediate retracted or open positions.

2. Casing according to Claim 1, **characterized in that** the retractable deflector (3), which is mounted on the casing (1) in a pivoting manner by means of a pin (3') and which is loaded by the spring (4) in the direction of automatic pivoting on opening, has a cross section identical to that of the dome (2) and is provided on its inner edge with a horizontal lip (3") that extends, in the open position of the retractable deflector (3), above the space freed by the latter in the dome (2) and bears against the central part of the casing (1) in the retracted position of said retractable deflector (3).

3. Casing according to Claim 1, **characterized in that** the releasable holding device (5) for the retractable deflector (3) is in the form of a plate that is connected, on the one hand, at one end to an articulation (6) that is provided on the retractable deflector (3) close to its end away from the casing (1), in an ejection position, this plate moreover being connected, at its opposite end, to a guide peg (7) provided on the casing (1) above the dome (2), close to the edge of the opening covered by the lip (3") of the retractable deflector (3), in the ejection position of the latter, this peg (7) engaging with a curvilinear guide groove (51) in the releasable holding device (5).

4. Casing according to Claim 3, **characterized in that** the releasable holding device (5) for the retractable deflector (3) is provided, on the side away from the articulation (6) on said retractable deflector (3) and from the curvilinear guide groove (51), with a lip (52) that is inclined downwards, parallel to the plane of the ejection end of said retractable deflector (3), in the ejection position of the latter, this lip (52) being provided with a flexible skirt (53) that extends, in said ejection position in front of the ejection opening, over the entire height of the casing (1), ensuring optimal security against projections in the open position of the deflector, and in all intermediate retracted or open positions.

5. Casing according to either one of Claims 3 and 4, **characterized in that** the releasable holding device (5) of the retractable deflector (3) is provided with a means (8) for locking the retractable deflector (3) in the closed position, said locking means (8) being constituted in the form of a toggle lever (8') mounted on the end of the releasable holding device (5), between its outer edge and the articulation (6) of the latter to the retractable deflector (3) and engaging, in the locked closed position of said retractable deflector (3), with a hook (8") fixed to the retractable deflector (3), close to the intersection of the latter with its horizontal lip (3"), close to its ejection opening.
